# EUROPÄISCHE PATENTANMELDUNG

(11) **EP 1 148 006 A1**
(43) Veröffentlichungstag der Anmeldung: **24.10.2001**
(21) Anmeldenummer: 01107117.2
(22) Anmeldetag: 22.03.2001
(51) Int. Cl.: B65G 39/20, B66B 23/14

(54) **Kettenrolle einer Transportkette**

(30) Priorität: 13.04.2000 AT 6462000
(71) Anmelder: FAIGLE KUNSTSTOFFE GESELLSCHAFT M.B.H., A-6971 Hard (AT)
(72) Erfinder: Murnig, Dietmar, 6972 Fussach (AT)
(74) Vertreter: Hefel, Herbert, Dipl.-Ing.

(57) **Zusammenfassung**

Eine Kettenrolle einer Transportkette für eine Rolltreppe oder einen Rollsteig zur Abstützung der Transportkette auf einer Führungsbahn weist einen kreisringförmigen Rollenkörper (15) auf, innerhalb dessen ein Lager (17) zur drehbaren Lagerung der Kettenrolle auf einer Achse angeordnet ist. Auf beiden Seiten axial neben dem Lager (17) ist jeweils eine erste Scheibe (19) angeordnet, die eine zentrale kreisrunde Öffnung (21) mit einem dem Durchmesser der zentralen Öffnung (18) des Lagers (17) etwa übereinstimmenden Durchmesser zur Ausbildung eines Preßsitzes auf der Achse aufweist. Axial neben der ersten Scheibe (19) ist auf der dem Lager (17) abgewandten Seite jeweils eine zweite Scheibe (23) angeordnet, die dicht am Rollenkörper (15) anliegend an diesem befestigt ist. Die erste und die zweite Scheibe (19, 23) weisen jeweils mindestens einen einander zugewandten ringförmigen Steg (22, 27) auf und die Stege (22, 27) der ersten und zweiten Scheibe (19, 23) sind in radialer Richtung voneinander beabstandet und überlappen in axialer Richtung, wobei mindestens ein Ringspalt (28) gebildet wird. In den Ringspalten (28) sowie zwischen der jeweiligen ersten Scheibe (19) und dem Lager (17) ist Schmierfett angeordnet (Fig. 2).

## Beschreibung

Die Erfindung betrifft eine Kettenrolle einer Transportkette für eine Rolltreppe oder einen Rollsteig zur Abstützung der Transportkette auf einer Führungsbahn, wobei die Kettenrolle einen kreisringförmigen Rollenkörper aufweist, innerhalb dessen ein Lager, vorzugsweise Wälzlager, mit einer zentralen kreisrunden Öffnung zur drehbaren Lagerung der Kettenrolle auf einer Achse angeordnet ist.

Kettenrollen aufweisende Transportketten für Rolltreppen oder Rollsteige sind bekannt. Beispielsweise in der EP 0 775 079 B1 ist eine derartige Kettenrolle beschrieben. Wenn infolge der begrenzten Lebensdauer, insbesondere durch Abnützung des Lagers, die zwischen den Laschen der Transportkette angeordneten Kettenrollen ausgetauscht werden müssen, führt dies zu einem erheblichen Montageaufwand.

Aus der US-PS 3,679,277 ist eine dynamoelektrische Maschine wie ein Motor bekannt, deren Rotorwelle von einem Kugellager gelagert ist. Das Kugellager ist seitlich von Abdeckungen umgeben, die gegenüber der rotierenden Welle mittels Gleitring-Dichtungen abgedichtet sind. In den dadurch gebildeten Raum, von dem das Kugellager aufgenommen ist, wird mittels einer Düse ein Fett-Luft-Gemisch eingesprüht, welches durch eine Auslassöffnung aus diesem Raum wieder austreten kann. In der dem Motorinneren zugewandten Abdeckung ist eine dem Kugellager zugewandte, die Welle umgebende Ringnut vorgesehen, in die ein in axialer Richtung der Welle sich erstreckender Steg ragt, der an einer an der Welle festgelegten Scheibe angeordnet ist. Es bildet sich ein mäanderförmiger Luftspalt, der zur Verringerung des auf den Gleitring ausgeübten Drucks dient. Dieser Gleitring muß daher weniger stark an die Welle angepreßt werden, so daß sich seine Lebensdauer verlängert.

Aufgabe der Erfindung ist es, eine Kettenrolle einer Transportkette mit einer verlängerten Lebensdauer bereitzustellen, und erfindungsgemäß gelingt dies bei einer Kettenrolle der eingangs genannten Art dadurch, daß auf beiden Seiten axial neben dem Lager jeweils eine erste Scheibe angeordnet ist, die eine zentrale kreisrunde Öffnung mit einem dem Durchmesser der zentralen Öffnung des Lagers etwa übereinstimmenden Durchmesser zur Ausbildung eines Preßsitzes auf der Achse aufweist, daß axial neben der ersten Scheibe auf der dem Lager abgewandten Seite jeweils eine zweite Scheibe angeordnet ist, die dicht am Rollenkörper anliegend an diesem befestigt ist, vorzugsweise durch Einschnappen, und sich bei dessen Rotation mitbewegt, daß die erste und die zweite Scheibe jeweils mindestens einen einander zugewandten ringförmigen Steg aufweisen und die Stege der ersten und zweiten Scheibe in radialer Richtung voneinander beabstandet sind und in axialer Richtung überlappen, wobei mindestens ein Ringspalt gebildet wird, und daß in den Ringspalten zwischen den Stegen der ersten und zweiten Scheibe sowie zwischen der jeweiligen ersten Scheibe und dem Lager Schmierfett angeordnet ist.

Durch die erfindungsgemäßen Maßnahmen wird eine hervorragende Abdichtung des Lagers der Kettenrolle erreicht, so daß dieses im Laufe des Betriebes weniger verschmutzt, wodurch die Lebensdauer verlängert wird. Weiters kann durch die erfindungsgemäßen Maßnahmen eine Schmierung auf Lebensdauer erreicht werden. In einer bevorzugten Ausführungsform sind an der ersten und/oder an der zweiten Scheibe jeweils zwei radial voneinander beabstandete Stege angeordnet, wobei in den zwischen den beiden Stegen einer Scheibe gebildeten kreisringförmigen Zwischenraum ein Steg der gegenüberliegenden Scheibe ragt.

Weitere Vorteile und Einzelheiten werden im folgenden anhand des in der Zeichnung gezeigten Ausführungsbeispiels erläutert. In dieser zeigen:
Fig. 1 eine schematische Darstellung eines Teils eines Rollsteiges und
Fig. 2 eine vergrößerte axial halbseitige Darstellung einer Kettenrolle im Querschnitt.

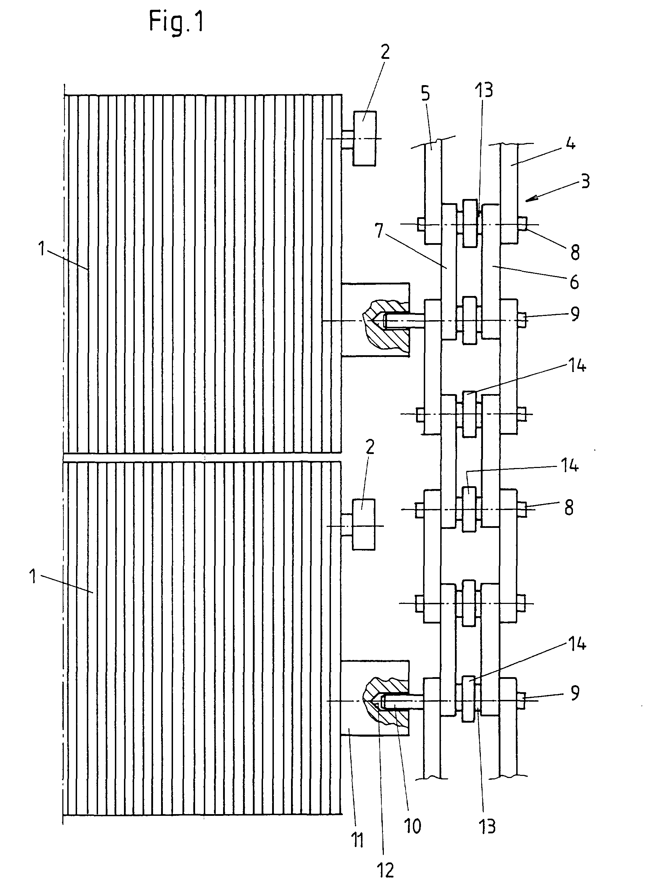

Der in Fig. 1 gezeigte Rollsteig weist (nur zum Teil dargestellte) Wagenpaletten 1 auf, an denen Laufrollen 2 fliegend gelagert sind, die über nicht dargestellte Schienenprofile abrollen. Zum Antrieb des Laufsteiges ist eine Transportkette 3 vorgesehen. Diese umfaßt äußere Laschen 4, 5 und innere Laschen 6, 7. Die äußeren Laschen 4, 5 sind auf diese verbindenden Bolzen 8, 9 festgelegt. Die Bolzen 9 sind dabei axial länger als die Bolzen 8 und ragen auf der den Wagenpaletten 1 zugewandten Seite der Transportkette 3 aus der jeweiligen äußeren Lasche 5 hervor und reichen mit ihren freien Enden 10 in Bohrungen 12 in Achsstummeln 11, die an der jeweiligen Wagenpalette 1 angeordnet sind. Die inneren Laschen 6, 7 sind auf Buchsen 13 festgelegt, welche drehbar auf den Bolzen 8, 9 angeordnet sind. Auf den Buchsen 13 sind zwischen den inneren Laschen 6, 7 Kettenrollen 14 drehbar gelagert. Die Kettenrollen 14 laufen auf einer nicht dargestellten Führungsbahn in Form einer Profilschiene und stützen die Transportkette auf dieser Führungsbahn ab. Derartige Transportketten sind bekannt (beispielsweise aus der EP 0 775 079 B1) und eine genauere Beschreibung der Transportkette 3 ist daher an dieser Stelle nicht notwendig.

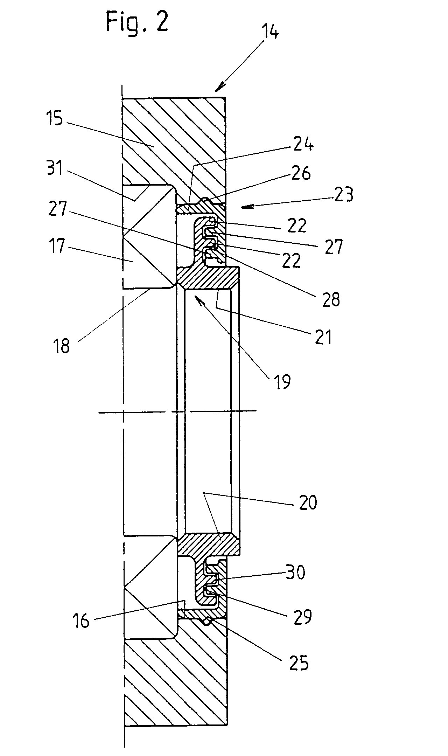

Wie aus Figur 2 ersichtlich, weist die Kettenrolle 14 einen kreisringförmigen Rollenkörper 15 auf, der in bekannter Weise aus Kunststoff bestehen kann. Der Rollenkörper kann auch zweiteilig oder mehrteilig ausgebildet sein, beispielsweise mit einem Grundkörper aus einem härteren Material und einem Laufring aus einem weicheren Kunststoff. In einer kreisringförmigen Nut 31 an der innenliegenden Mantelfläche 16 des Rollenkörpers 15 ist ein Lager in Form eines als Kugellager ausgebildeten Wälzlagers 17 eingepreßt, dessen innere kreisrunde Öffnung 18 über einen Preßsitz auf der Buchse 13 als Achse festlegbar ist. Axial neben dem Lager 17 ist jeweils eine erste Scheibe 19 angeordnet, die eine von einem in axialer Richtung verlaufenden Steg 20 begrenzte Öffnung 21 aufweist. Der Durchmesser der Öffnung 21 stimmt etwa mit dem Durchmesser der Öffnung 18 des Lagers 17 überein, so daß die erste Scheibe 19 ebenfalls auf der die Achse bildenden Buchse 13 über einen Preßsitz festgelegt werden kann. Axial neben der ersten Scheibe 19 ist auf der dem Lager 17 abgewandten Seite jeweils eine zweite Scheibe 23 angeordnet. Diese weist einen Flansch 24 in Form eines in Richtung des Lagers 17 weisenden Steges auf. Der Außendurchmesser des Flansches 24 ist so an den Innendurchmesser des Rollenkörpers 15 angepaßt, daß der Flansch in den von der inneren Mantelfläche 16 des Rollenkörpers umgebenen Raum einschiebbar ist, wobei eine Rastnase 26 in eine Ringnut 25 im axial äußeren Bereich der inneren Mantelfläche 16 einrastbar ist. Auf diese Weise liegt die zweite Scheibe 23 dicht am Rollenkörper 15 an und bewegt sich bei dessen Rotation mit diesem mit.

Die erste und zweite Scheibe 19, 23 weisen jeweils einander zugewandte, ringförmige Stege 22, 27 auf. Die Stege 22 der ersten Scheibe 19 sind von den Stegen 27 der zweiten Scheibe in radialer Richtung voneinander beabstandet und überlappen mit diesen in axialer Richtung, wobei zwischen den Stegen 22, 27 Ringspalte 28 gebildet werden. Anders ausgedrückt, ragt in den zwischen den Stegen 22 der ersten Scheibe 19 gebildeten, kreisringförmigen Zwischenraum ein Steg 27 der zweiten Scheibe 23 und in den von den Stegen 27 eingeschlossenen, kreisringförmigen Zwischenraum 30 ein Steg 22 der ersten Scheibe 19. Insgesamt wird dadurch eine sogenannte Labyrinthdichtung gebildet.

Bei der Montage wird zunächst ein Schmierfett auf die axial seitliche Fläche des Lagers 17 aufgetragen und anschließend die erste Scheibe 19 eingesetzt. Auf die Außenseite der ersten Scheibe 19 wird nochmals Schmierfett aufgetragen und anschließend die zweite Scheibe 23 in die Öffnung 16 eingedrückt. Dadurch wird eine Schmierung auf Lebensdauer und eine zuverlässige Abdichtung gegenüber einem Eindringen von Schmutz erreicht.

Das gezeigte Ausführungsbeispiel kann auf unterschiedliche Weise modifiziert werden, ohne den Bereich der Erfindung zu verlassen. Beispielsweise können mehr oder weniger Stege 22 oder 27 vorgesehen sein. Günstig ist es, wenn mindestens zwei Stege an der ersten oder zweiten Scheibe angeordnet sind, wobei in den von diesen eingeschlossenen, ringförmigen Zwischenraum ein Steg der gegenüberliegenden Scheibe ragt. Zumindest sind jedoch an der ersten und zweiten Scheibe jeweils ein einander zugewandter Steg vorgesehen, zwischen denen ein Ringspalt gebildet wird. Auch die Befestigung der zweiten Scheibe 23 am Rollenkörper 15 kann auf unterschiedliche Weise erreicht werden. Es könnten beispielsweise auch Bohrungen an der axialen Außenseite des Rollenkörpers 15 vorgesehen sein, in die Zapfen an der zweiten Scheibe 23 ragen, die darin beispielsweise festgeklebt sind. Anstelle der Ausbildung des Lagers 17 als Wälzlager kann dieses auch als Gleitlager ausgebildet sein.

Die Herstellung der beiden Scheiben kann auch in einem Zweikomponenten-Spritzgießverfahren erfolgen, wobei für die beiden Scheiben sich nicht verbindende Materialien verwendet werden und ein Spiel zwischen den beiden Scheiben durch den material- und prozeßbedingten Schwund bei der Herstellung entsteht.

### Legende

zu den Hinweisziffern:
- 1: Wagenpalette
- 2: Laufrolle
- 3: Transportkette
- 4: äußere Lasche
- 5: äußere Lasche
- 6: innere Lasche
- 7: innere Lasche
- 8: Bolzen
- 9: Bolzen
- 10: freies Ende
- 11: Achsstummel
- 12: Bohrung
- 13: Buchse
- 14: Kettenrolle
- 15: Rollenkörper
- 16: innere Mantelfläche
- 17: Lager
- 18: Öffnung
- 19: erste Scheibe
- 20: Steg
- 21: Öffnung
- 22: Steg
- 23: zweite Scheibe
- 24: Flansch
- 25: Ringnut
- 26: Rastnase
- 27: Steg
- 28: Ringspalt
- 29: Zwischenraum
- 30: Zwischenraum
- 31: Ringnut

## Patentansprüche

1. Kettenrolle einer Transportkette für eine Rolltreppe oder einen Rollsteig zur Abstützung der Transportkette auf einer Führungsbahn, wobei die Kettenrolle einen kreisringförmigen Rollenkörper aufweist, innerhalb dessen ein Lager, vorzugsweise Wälzlager, mit einer zentralen kreisrunden Öffnung zur drehbaren Lagerung der Kettenrolle auf einer Achse angeordnet ist, **dadurch gekennzeichnet, daß** auf beiden Seiten axial neben dem Lager jeweils eine erste Scheibe (19) angeordnet ist, die eine zentrale kreisrunde Öffnung (21) mit einem dem Durchmesser der zentralen Öffnung (18) des Lagers (17) etwa übereinstimmenden Durchmesser zur Ausbildung eines Preßsitzes auf der Achse aufweist, daß axial neben der ersten Scheibe (19) auf der dem Lager (17) abgewandten Seite jeweils eine zweite Scheibe (23) angeordnet ist, die dicht am Rollenkörper (15) anliegend an diesem befestigt ist, vorzugsweise durch Einschnappen, und sich bei dessen Rotation mitbewegt, daß die erste und die zweite Scheibe (19, 23) jeweils mindestens einen einander zugewandten ringförmigen Steg (22, 27) aufweisen und die Stege (22, 27) der ersten und zweiten Scheibe (19, 23) in radialer Richtung voneinander beabstandet sind und in axialer Richtung überlappen, wobei mindestens ein Ringspalt (28) gebildet wird, und daß in den Ringspalten (28) zwischen den Stegen (22, 27) der ersten und zweiten Scheibe (19, 23) sowie zwischen der jeweiligen ersten Scheibe (19) und dem Lager (17) Schmierfett angeordnet ist.

2. Kettenrolle nach Anspruch 1, **dadurch gekennzeichnet, daß** an der ersten oder zweiten Scheibe (19, 23) mindestens zwei radial voneinander beabstandete, kreisringförmige Stege (22, 27) angeordnet sind, wobei in den zwischen ihnen gebildeten, kreisringförmigen Zwischenraum (29, 30) ein Steg (27, 22) der gegenüberliegenden zweiten oder ersten Scheibe (23, 19) ragt.

3. Kettenrolle nach Anspruch 2, **dadurch gekennzeichnet, daß** an der ersten und an der zweiten Scheibe (19, 23) jeweils zwei radial voneinander beabstandete, kreisringförmige Stege (22, 27) angeordnet sind, wobei in die von den zwei benachbarten Stegen (22, 27) gebildeten, kreisringförmigen Zwischenräume (29, 30) der einen Scheibe (19, 23) jeweils ein Steg (27, 22) der gegenüberliegenden anderen Scheibe (23, 19) ragt.

4. Kettenrolle nach einem der Ansprüche 1 bis 3, **dadurch gekennzeichnet, daß** zur Befestigung der zweiten Scheibe (23) am Rollenkörper (15) die zweite Scheibe (23) einen kreisringförmigen Flansch (24) aufweist, dessen Außendurchmesser an den Innendurchmesser des Rollenkörpers (15) angepaßt ist, wobei der Flansch (24) klemmend, vorzugsweise über Rastnasen (26) und eine in der inneren Mantelfläche (16) des Rollenkörpers (15) angeordneten Ringnut (25), im Rollenkörper (15) festgelegt ist.

5. Kettenrolle nach einem der Ansprüche 1 bis 4, **dadurch gekennzeichnet, daß** die zentrale Öffnung (21) der ersten Scheibe (19) von einem sich in axialer Richtung erstreckenden Steg (20) begrenzt wird.

6. Kettenrolle nach einem der Ansprüche 1 bis 5, **dadurch gekennzeichnet, daß** das Lager (17) in einer Ringnut (31) an der inneren Mantelfläche (16) des Rollenkörpers (15) eingepreßt ist.
